# FASCICULE DE BREVET EUROPEEN

(11) **EP 1 675 662 B1**
(45) Date de publication et mention de la délivrance du brevet: **09.01.2008**
(21) Numéro de dépôt: 04817288.6
(22) Date de dépôt: 19.10.2004
(51) Int. Cl.: A63F 3/00, A63F 9/24, G01S 13/02

(54) **ENSEMBLE LUDO-EDUCATIF ELECTRONIQUE AVEC DES ELEMENTS COMMUNICANTS A ETIQUETTE RADIOFREQUENCE**
ELEKTRONISCHES LERNSPIELSET MIT KOMMUNIKATIONSELEMENTEN MIT EINEM HOCHFREQUENZ-TAG
ELECTRONIC EDUCATIONAL GAME SET HAVING COMMUNICATING ELEMENTS WITH A RADIO-FREQUENCY TAG

(30) Priorité: 20.10.2003 FR 0312249
(43) Date de publication de la demande: 05.07.2006
(73) Titulaire: Numicom, 38430 Moirans (FR)
(72) Inventeur: MONPOUET, Pascal, F-38960 Saint Etienne de Crossey (FR); RICARD, François-Gilles, F-73190 Saint Baldoph (FR); TRANNOY, Anne-Marie, F-38400 Saint Martin d'Heres (FR)
(74) Mandataire: Jouvray, Marie-Andrée
(86) Numéro de dépôt international: PCT/FR2004/002663
(87) Numéro de publication internationale: WO 2005/039714

(56) Documents cités:
- GB-A- 2 344 257
- US-A- 5 853 327
- US-A- 6 102 397
- US-B1- 6 331 145

## Description

### Domaine technique de l'invention

L'invention concerne un ensemble ludo-éducatif électronique comportant des éléments communicants, portant chacun une étiquette radiofréquence munie d'un code d'identification individuel, et un plateau de jeu comportant un circuit de traitement numérique connecté à une pluralité d'antennes disposées de manière à constituer une matrice de détection, pour la détection de la présence, de la nature et de la position des éléments communicants.

### État de la technique

Dans la plupart des jeux électroniques, un joueur est installé devant une console ou un ordinateur, la communication homme-machine se faisant par l'intermédiaire d'un clavier, d'une souris, d'une manette ou d'un écran tactile. Il peut éventuellement jouer en réseau avec d'autres joueurs ayant leurs propres ordinateurs et connectés à un même réseau de communication, par exemple par Internet.

Par ailleurs, le document WO-A-9526790 propose la combinaison d'un plateau de jeu et de pièces munies d'un transpondeur, communiquant par radiofréquence avec le plateau et associé à un code d'identification. Le document WO-A-0211836 utilise également ce principe pour un jeu d'échec électronique, permettant d'afficher en temps réel sur une unité d'affichage la position des différentes pièces et, éventuellement, de transmettre ces images par l'intermédiaire d'Internet. Cependant, les composants particuliers utilisés dans le jeu d'échec sont coûteux et la profondeur de champ de détection, de l'ordre de 20mm, est trop importante et risque de provoquer des reconnaissances intermédiaires erronées de pions lors d'un simple survol du plateau. De plus, tous les dispositifs connus utilisant une communication par radiofréquence entre des pièces et un plateau de jeu sont dédiés à un seul type de jeu (les échecs) et ont un temps de réponse relativement long, typiquement de l'ordre de 2,5s.

En plus, le document GB-A-2344257 divulgue toutes les caractéristiques techniques définies dans le préambule de la revendication 1.

### Objet de l'invention

L'invention a pour but un ensemble ludo-éducatif ne présentant pas ces inconvénients et, plus particulièrement, un ensemble combinant la convivialité d'un jeu classique et les avantages d'un jeu électronique et ayant un temps de réponse réduit.

Selon l'invention, ce but est atteint par les revendications annexées et, plus particulièrement, par le fait que le plateau de jeu comporte une pluralité de lecteurs radiofréquence respectivement connectés à des bornes d'entrée/sortie correspondantes du circuit de traitement numérique, chaque lecteur radiofréquence étant connecté à un ensemble d'antennes associé.

Les éléments communicants peuvent être constitués par des pions, des figurines, des cartes ou des dés.

Selon un développement de l'invention, l'ensemble comporte un tapis de jeu amovible, disposé sur le plateau de jeu et comportant une étiquette radiofréquence munie d'un code d'identification représentatif du jeu correspondant.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre schématiquement un mode particulier de réalisation d'un ensemble selon l'invention.
La figure 2 représente schématiquement une étiquette radiofréquence intégrée dans un élément communicant d'un ensemble selon l'invention.
La figure 3 illustre la division, en lignes et en colonnes, d'un plateau de jeu d'un ensemble selon l'invention.
Les figures 4 et 5 illustrent deux variantes de réalisation des connexions électriques d'un plateau de jeu d'un ensemble selon l'invention.
La figure 6 représente un plateau de jeu constitué par l'assemblage de plusieurs plateaux élémentaires.

### Description de modes particuliers de réalisation.

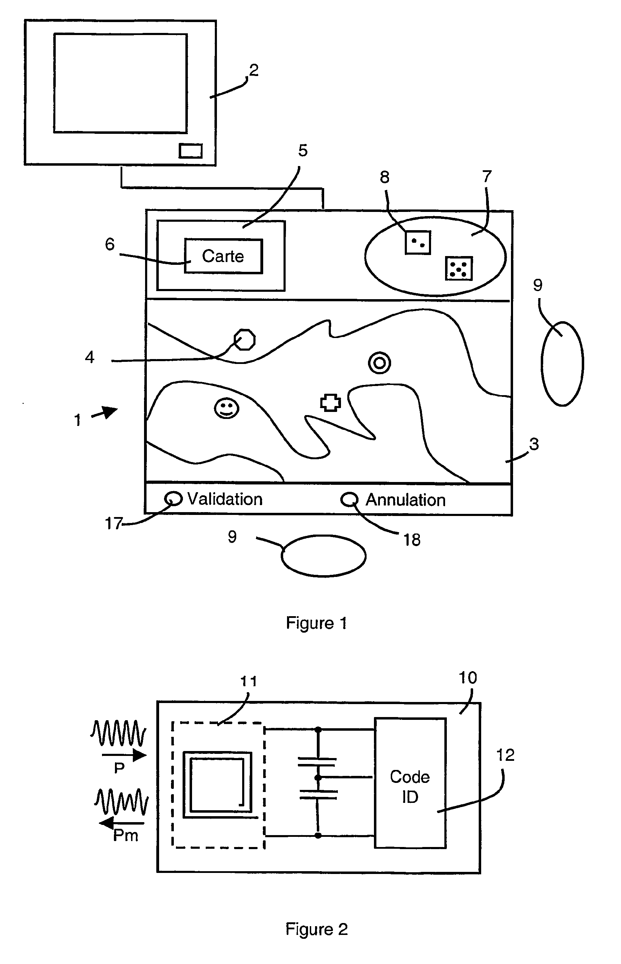

Dans le mode de réalisation particulier illustré à la figure 1, l'ensemble ludo-éducatif comporte un plateau de jeu 1 destiné à coopérer, avec ou sans fil, de préférence par une liaison HF (hyperfréquence), avec un ordinateur 2, constituant un organe d'affichage et de supervision externe. Un tapis de jeu 3, de préférence souple et amovible, recouvre le plateau 1. L'interchangeabilité du tapis de jeu permet de passer facilement d'un jeu à un autre. Le plateau 1 comporte au moins une zone de jeu. Dans le mode de réalisation représenté à la figure 1, une première zone de jeu est destinée au déplacement de différents pièces 4, constituées par des pions ou des figurines. Une seconde zone de jeu constitue un sabot 5 pour la lecture d'une carte 6, tandis qu'une troisième zone de jeu 7 délimite un emplacement pour le lancement d'au moins un dé 8.

Des joueurs 9 prennent place autour du plateau de jeu, muni du tapis de jeu correspondant au jeu sélectionné. Les pions ou figurines 4, les cartes 6 et les dés 8 constituent des éléments communicants, dont la présence, la nature et la position sont détectées automatiquement par le plateau de jeu. En effet, chaque élément communicant comporte une étiquette 10 d'identification par fréquence radio (RFID), ou étiquette radiofréquence, munie d'un code d'identification individuel (code ID) et le plateau comporte des éléments de détection appropriés disposés à des emplacements prédéterminés du plateau. Le tapis de jeu 3 peut également comporter une étiquette radiofréquence 10, permettant ainsi une identification automatique du jeu sélectionné par le plateau de jeu 1 et l'ordinateur 2.

Comme représenté à la figure 2, chaque étiquette 10 est, de manière connue, constituée par une étiquette radiofréquence passive, comportant une antenne 11 accordée sur une fréquence prédéterminée et connectée à un circuit 12 contenant en mémoire le code d'identification individuel correspondant. Un signal de porteuse P reçu par l'étiquette 10 sert simultanément de signal de communication et d'alimentation en énergie de l'étiquette. Celle-ci modifie le signal de porteuse, le modulant en amplitude (Pm) par son code d'identification individuel. Dans un mode de réalisation préférentiel, les étiquettes 10 sont extra-plates, avec des antennes 11, de préférence rectangulaires, formées par plusieurs tours de pistes conductrices et connectées à un circuit 12. Il est ainsi possible de réduire au maximum l'encombrement des étiquettes, par exemple sous forme d'un carré extra-plat de l'ordre de 2cm de côté, et de les insérer facilement dans les pions, les figurines, les cartes, les dés ou le tapis de jeu.

Le dé 8 peut être un dé d'apparence classique, comportant une étiquette 10, associée à chacune de ses faces, c'est-à-dire 6 étiquettes munies de 6 codes d'identification différents correspondant respectivement aux différents nombres. Au moins un élément de détection correspondante du plateau de jeu, disposé dans la troisième zone de jeu 7, délimitant l'emplacement de lancement de dés, permet alors de détecter quelle face est en contact avec le plateau de jeu et, en conséquence, quel nombre est visible. Dans une variante de réalisation, le dé 8 est "blanc", c'est-à-dire sans inscription représentative d'un nombre sur chacune de ses faces, et ne comporte qu'une ou deux étiquettes d'identification radiofréquence. Dans ce cas, lorsque la présence d'un dé dans la zone 7 correspondante du plateau de jeu 1 est détectée, l'ordinateur 2 sélectionne, de façon aléatoire, un nombre et l'affiche sur son écran. C'est ce nombre qui est alors utilisé par le joueur concerné. Qu'il soit d'apparence classique ou qu'il s'agisse d'un dé blanc, le dé 8 peut comporter un nombre de faces différent de 6, typiquement 4, 6, 8, 10, 12 ou 20 faces.

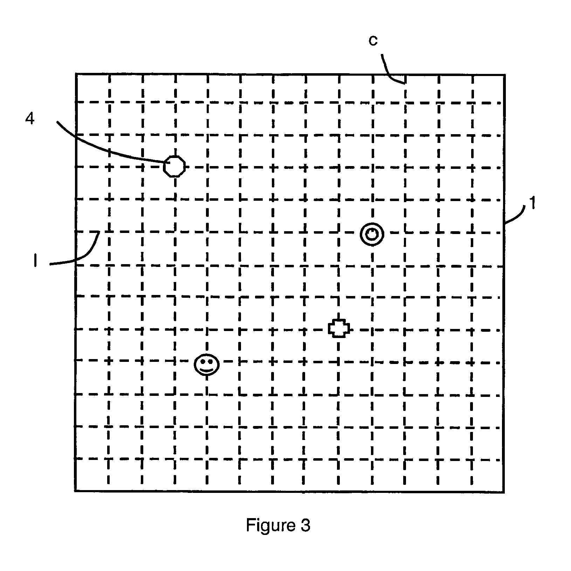

Comme représenté en pointillés sur la figure 3, le plateau de jeu 1 ou, au moins, la première zone de jeu est divisé en une pluralité d'emplacements délimités par des lignes 1 et des colonnes c. Une matrice de détection est constituée par des antennes 14, disposées aux intersections des lignes I et des colonnes c sur lesquelles les éléments communicants peuvent être placés. Chaque antenne 14 est, de préférence plane et constituée par des spires rectangulaires en matériau conducteur (métal ou encre conductrice) formant un grand nombre de tours. Les dimensions de l'antenne correspondent, de préférence, à un emplacement du plateau de jeu ayant des dimensions inférieures à 2cm, typiquement 18mm, de côté.

Pour permettre l'interrogation et la lecture en radiofréquence des éléments communicants (par exemple des pions, des figurines, des cartes, des dés ou un tapis de jeu) disposés sur le plateau de jeu et ainsi détecter la présence, la nature et la position de ces différents éléments communicants, le plateau de jeu comporte, par exemple sous forme de circuit imprimé, un circuit de traitement numérique 15, connecté aux antennes 14 par des lecteurs radiofréquence 13.

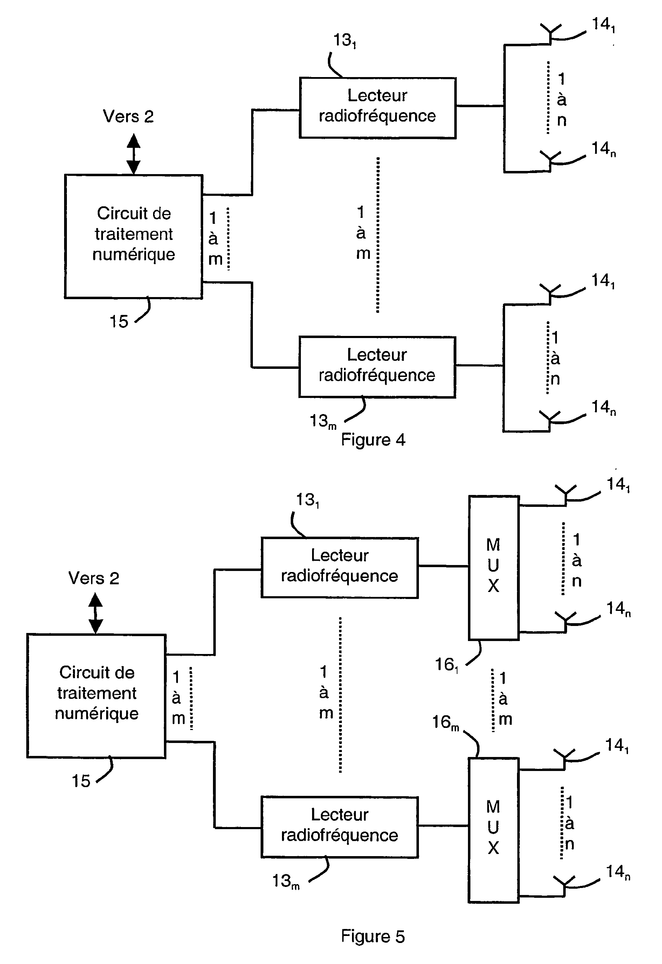

Comme représenté à la figure 4, le circuit de traitement numérique 15 comporte un nombre m prédéterminé de bornes d'entrée/sortie, respectivement connectées à m lecteurs radiofréquence (13₁ à 13ₘ). Chaque lecteur radiofréquence 13 est connecté à un ensemble de n antennes 14₁ à 14ₙ. Dans ce mode de réalisation particulier, il est nécessaire de gérer les collisions. Chaque lecteur radiofréquence 13 et chaque étiquette 10 des éléments communicants doivent alors, de manière connue, intégrer une fonction anticollision.

Dans le mode de réalisation préférentiel de la figure 5, un multiplexeur 16 est disposé entre chaque lecteur radiofréquence 13 et l'ensemble associé de n antennes. Les lecteurs radiofréquence 13 et les étiquettes 10 n'ont plus à gérer d'éventuelles collisions et peuvent alors être simplifiés. En effet, chaque multiplexeur 16 permet l'interrogation et la lecture sélective de chaque antenne associée, sous le contrôle du circuit de traitement numérique 15.

À titre d'exemple, le plateau 1 peut comporter 16 à 25 lecteurs radiofréquence 13, connectés chacun à 4, 8 ou 16 antennes. Ainsi, avec n=16 et m=16 ou 25, il est respectivement possible de former une matrice de nm=256 ou 400 antennes.

Chaque élément de détection 13 vérifie en permanence la présence éventuelle d'un élément communicant sur les antennes 14, à 14ₙ associées. De manière connue, un lecteur radiofréquence 13 génère en permanence un signal de porteuse P, sensiblement sinusoïdal, de fréquence prédéterminée correspondant à la fréquence d'accord des étiquettes 10. Si un élément communicant est disposé à l'emplacement correspondant, il module le signal de porteuse et le signal de porteuse modulé Pm est détecté, démodulé et mis en forme par le lecteur radiofréquence.

Sur demande du circuit de traitement numérique 15, chaque lecteur 13 envoie, sous forme de trame, les informations représentatives de la nature (code ID) de l'étiquette détectée. En l'absence d'élément communicant à l'emplacement correspondant à une antenne 14, le lecteur radiofréquence associé reste muet. Ainsi, chaque lecteur radiofréquence 13 ne communique avec le circuit de traitement numérique 15 qu'en présence d'un élément communicant sur un emplacement du plateau de jeu correspondant à l'une des antennes qui lui sont associées. Le circuit de traitement numérique 15, ayant répertorié la position de chaque antenne, est donc capable de déterminer la position de l'étiquette 10 détectée. Le circuit de traitement numérique 15 reçoit donc en permanence les données nécessaires à l'identification et au positionnement de tous les pions ou figurines disposées sur le plateau et peut identifier rapidement tout changement.

La fréquence du signal de porteuse est de préférence de l'ordre de 14MHz, typiquement 13,56MHz. La profondeur de champ permettant la détection d'une étiquette peut alors être relativement faible, typiquement de l'ordre de 5mm. Ceci permet d'éliminer les erreurs de détection lors d'un survol du plateau de jeu par un pion ou une figurine et d'éviter la création d'interférences entre des emplacements voisins. L'utilisation d'autres fréquences de porteuse, plus faibles, par exemple de l'ordre de 125kHz, classiquement utilisées dans un certain nombre d'applications utilisant des étiquettes radiofréquence bon marché, peut également être envisagée.

L'association d'un lecteur radiofréquence à plusieurs antennes (14₁ à 14ₙ) et la mise en parallèle de plusieurs lecteurs radiofréquence (13₁ à 13ₘ) à la sortie du circuit de traitement numérique 15 permettent de réduire notablement le temps de réponse. À titre d'exemple, pour un plateau de jeu selon l'invention comportant 400 emplacements, le temps de réponse, qui serait de l'ordre de plusieurs secondes, typiquement 2,5s, si toutes les antennes des éléments de détection étaient connectées à une entrée série d'un circuit de traitement centralisé, est réduit à environ 90ms.

Les étiquettes 10 des éléments communicants sont, de préférence, sollicitées uniquement en lecture par les lecteurs radiofréquence 13. Il est cependant possible d'utiliser des étiquettes 10 pouvant être sollicitées également en écriture, de manière à permettre de modifier le code d'identification et/ou l'historique embarqué du pion ou de la figurine correspondante. L'historique associé à un élément communicant est alors mémorisé dans une mémoire de l'étiquette 10 de cet élément communicant.

Dans une variante de réalisation, il est possible d'inhiber une étiquette 10, de manière à neutraliser l'élément communiquant correspondant. À titre d'exemple, ceci peut être utilisé dans un jeu de rôle en cas de perte d'une vie d'un personnage associé à une figurine.

La combinaison du plateau de jeu 1 et de l'ordinateur 2, communiquant avec le circuit de traitement numérique 15, permet la gestion du jeu par l'ordinateur 2, tout en apportant la convivialité du plateau de jeu et la possibilité de passer facilement d'un jeu à un autre. Le même plateau de jeu 1 peut être utilisé pour tout type de jeu utilisant des pions, des figurines, des cartes et/ou des dés, et, plus particulièrement pour les jeux numériques interactifs, les jeux de société, les jeux de casino et les jeux de rôle. Il peut également être utilisé dans le domaine éducatif ou culturel, notamment dans des applications pédagogiques, scénographiques ou muséographiques. À titre d'exemple, il peut être utilisé sous forme d'un jeu de l'oie permettant de découvrir des informations constituées par des animations sur l'écran de l'ordinateur 2 au fur et à mesure du déplacement d'un pion sur le plateau de jeu.

Des logiciels de jeux adaptés à divers jeux étant préalablement introduits dans l'ordinateur 2, un jeu particulier peut être choisi simplement par le positionnement du tapis de jeu 3 correspondant sur le plateau de jeu. Si le tapis de jeu est muni d'une étiquette d'identification 10, l'ordinateur 2 identifie automatiquement le jeu sélectionné, éventuellement après activation d'un bouton de démarrage (non représenté) disposé sur le plateau de jeu. L'ordinateur peut alors afficher la règle du jeu et, pendant le déroulement d'une partie, des informations concernant celle-ci, des indications aux joueurs concernant les actions à effectuer, des images vidéo, du son et/ou des images de synthèse (par exemple des images d'un hôtel en construction pour un jeu de type Monopoly®), destinés à illustrer ou à enrichir la partie. Il peut jouer le rôle d'un banquier (par exemple dans un jeu de type Monopoly®), d'un arbitre... L'ordinateur 2 peut éventuellement être connecté au réseau Internet. Il est alors possible de jouer contre un adversaire ou une équipe situé à distance ou d'aller chercher des animations vidéos sur Internet. Dans un jeu de rôle, l'ordinateur 2 peut jouer le rôle du maître du jeu. Il peut aller chercher sur Internet des informations concernant les pouvoirs particuliers associés à une pièce particulière et afficher ces informations sur son écran, de préférence sous une forme ludique.

Chaque élément communicant est, de préférence, associé à un code d'identification individuel (ID) unique, préalablement répertorié dans une base de données. L'ensemble comporte, dans le circuit de traitement numérique 15 ou, de préférence, dans l'ordinateur 2, dans la mémoire des étiquettes 10 et/ou dans une base de données externe, accessible en ligne sur Internet, des moyens de mémorisation de l'historique des déplacements et/ou des droits des différents éléments communicants au cours du jeu ou durant toute la vie d'un élément communicant, les droits d'une figurine pouvant évoluer d'une partie à l'autre. Pour les jeux de rôle notamment, cet historique peut inclure l'évolution dans le temps des caractéristiques, des qualités ou de la qualification d'une figurine, par exemple le passage de l'enfance à l'âge adulte, l'acquisition ou la perte de certains pouvoirs.

Le plateau de jeu 1 peut comporter un ou plusieurs boutons de validation 17 (par exemple quatre) et un bouton d'annulation 18 (figure 1), connectés au circuit de traitement numérique 15. Un bouton de validation 17 est destiné, dans certains jeux, à permettre la prise en compte du coup qui vient d'être joué. Dans les jeux dans lesquels les boutons de validation ne sont pas utilisés, le coup est considéré comme joué dès qu'une pièce (pion ou figurine) est posée sur le plateau de jeu. En fonction du type de jeu, l'ordinateur 2 peut indiquer aux joueurs, dès le début du jeu ou en cours de partie, si les boutons de validation doivent être utilisés. Le bouton d'annulation 18 est destiné à permettre le retour à la position précédente des pièces sur le plateau de jeu. Ceci peut notamment être intéressant en cas de bouleversement accidentel des pièces sur le plateau de jeu. L'écran de l'ordinateur affiche alors la position antérieure des différentes pièces sur le plateau de jeu, de manière à permettre aux joueurs de remettre le jeu en l'état.

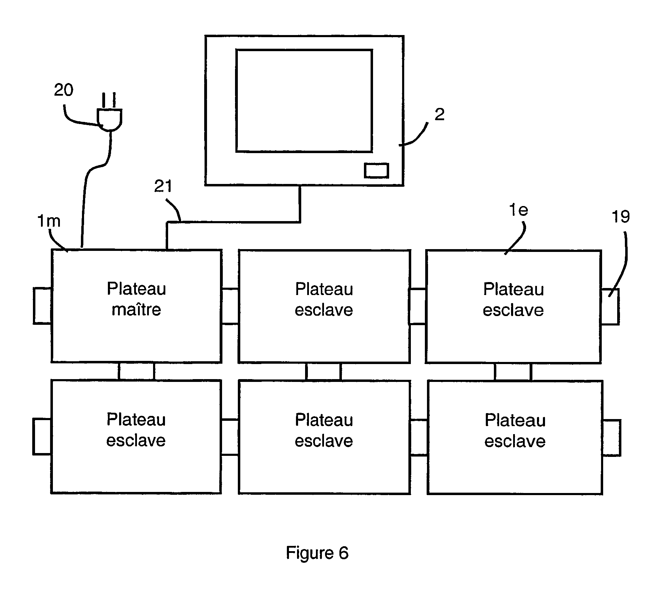

Comme représenté à la figure 6, un plateau de jeu peut être constitué par un assemblage amovible de plusieurs plateaux élémentaires, de manière à moduler ou à agrandir la surface de jeu en fonction des besoins. Chaque plateau élémentaire comporte un circuit de traitement numérique élémentaire 15, connecté aux antennes 14 de ce plateau élémentaire. Cet assemblage amovible est plus particulièrement intéressant dans les jeux de rôle. L'assemblage représenté comporte 6 plateaux élémentaires, munis chacun, sur trois de leurs parois latérales, de connecteurs d'assemblage 19 permettant de connecter électriquement et mécaniquement tout plateau élémentaire à un, deux ou trois autres plateaux élémentaires adjacents. Électriquement, la connexion entre les circuits de traitement numérique 15 de deux plateaux élémentaires est, de préférence, réalisée sans fil ou par une liaison série, fiable et peu encombrante.

L'ensemble peut comporter un plateau principal, initialement configuré comme plateau maître 1 m, et plusieurs plateaux additionnels, initialement configurés en esclave 1e.

Dans un mode de réalisation particulier, intégrant des connexions physiques, tous les plateaux élémentaires sont initialement identiques, mais seul l'un des plateaux élémentaires, constituant le plateau maître 1 m, est connecté, à partir de sa quatrième face latérale, à un réseau d'alimentation électrique par l'intermédiaire d'un connecteur d'alimentation 20, et, éventuellement par une liaison filaire 21, à l'ordinateur 2. Tous les autres plateaux élémentaires constituent alors les plateaux esclaves 1e, connectés, directement ou par l'intermédiaire d'autres plateaux esclaves1e, au plateau maître 1 m. Chaque connecteur d'assemblage 19 doit donc permettre la transmission bidirectionnelle de données entre deux plateaux élémentaires adjacents, par exemple par l'intermédiaire d'un fil de sortie et d'un fil d'entrée. Il doit également permettre l'alimentation du plateau élémentaire, à partir du connecteur d'alimentation 20 du plateau maître 1 m, par exemple par l'intermédiaire de deux fils d'alimentation, dont l'un est connectés à la masse.

La configuration d'un plateau élémentaire en plateau maître 1m ou en plateau esclave 1 e peut s'effectuer automatiquement, de préférence à la mise sous tension du plateau de jeu constitué par l'assemblage de plateaux élémentaires, sous le contrôle de l'ordinateur 2 qui comporte, par exemple, des moyens de reconnaissance de la disposition des plateaux.

Dans un mode de réalisation préférentiel, le plateau (1) est constitué par une pluralité de plateaux élémentaires et les circuits de traitement numérique élémentaires 15 communiquent tous sans fil, entre eux et/ou directement avec l'organe (2) d'affichage et de supervision externe.

L'invention n'est pas limitée aux modes particuliers de réalisation décrits ci-dessus. En particulier, la reconnaissance d'une carte 6 disposée dans le sabot 5 peut éventuellement être réalisée par détection optique. Dans ce cas, les cartes 6 ne comportent pas d'étiquette radiofréquence, mais des éléments de repérage optique, codés sous la forme de points noir et blanc ou de code-barre par exemple, susceptibles d'être identifiés par des détecteurs appropriés disposés dans la seconde zone de jeu et connectés au circuit de traitement numérique 15.

Par ailleurs, de façon préférentielle, le plateau de jeu peut ne comporter qu'une seule zone de jeu, permettant de détecter la présence, la nature et la position de tout type d'élément communicant (pion, figurine, dé, carte ou tapis de jeu).

L'ensemble peut également comporter un écran, par exemple à cristaux liquides, permettant d'afficher le tapis de jeu 3, sous forme virtuelle, dématérialisée, sur une face avant du plateau de jeu 1, c'est-à-dire sur sa surface supérieure. Cet écran peut éventuellement afficher des fenêtres destinées à servir d'interface pour l'organe d'affichage et de supervision 2. Le plateau de jeu peut alors intégrer en totalité l'organe de supervision. Dans ce dernier cas, l'ensemble ludo-éducatif peut devenir complètement autonome.

Le plateau de jeu 1 peut également gérer la diffusion de fichiers sonores complémentaires de ceux qui sont diffusés par l'organe de supervision 2. Ces fichiers sonores complémentaires peuvent être enregistrés dans une librairie embarquée dans un module mémoire dédié et/ou la liaison HF peut être utilisée pour retransmettre depuis le plateau les sons des applications.

## Revendications

1. Ensemble ludo-éducatif électronique comportant des éléments communicants (4, 6, 8), portant chacun une étiquette radiofréquence (10) munie d'un code d'identification individuel (ID), et un plateau de jeu (1) comportant un circuit de traitement numérique (15) connecté à une pluralité d'antennes (14) disposées de manière à constituer une matrice de détection, pour la détection de la présence, de la nature et de la position des éléments communicants, ensemble **caractérisé en ce que** le plateau de jeu comporte une pluralité de lecteurs radiofréquence (13₁ à 13ₘ) respectivement connectés à des bornes d'entrée/sortie correspondantes du circuit de traitement numérique (15), chaque lecteur radiofréquence (13) étant connecté à un ensemble d'antennes (14, à 14ₙ) associé.

2. Ensemble selon la revendication 1, **caractérisé en ce qu'**il comporte un multiplexeur (16) entre chaque lecteur radiofréquence (13) et l'ensemble d'antennes (14) associé.

3. Ensemble selon l'une des revendications 1 et 2, **caractérisé en ce que** le plateau (1) est constitué par un assemblage amovible d'une pluralité de plateaux élémentaires, comportant chacun un circuit de traitement numérique élémentaire (15) connecté aux antennes (14) dudit plateau élémentaire.

4. Ensemble selon la revendication 3, **caractérisé en ce que** chaque plateau élémentaire comporte, sur trois parois latérales, des moyens (21) de connexion électrique et mécanique avec un autre plateau élémentaire.

5. Ensemble selon l'une des revendications 3 et 4, **caractérisé en ce que** chaque plateau élémentaire comporte des moyens de configuration en plateau maître (1 m) ou esclave (1e), seul le plateau maître (1 m) communiquant avec un organe (2) d'affichage et de supervision.

6. Ensemble selon la revendication 3, **caractérisé en ce que** les circuits de traitement numérique élémentaires (15) des plateaux élémentaires communiquent sans fil entre eux et/ou avec un organe (2) d'affichage et de supervision externe.

7. Ensemble selon l'une quelconque des revendications 1 à 6, **caractérisé en ce que** les éléments communicants comportent des pions (4), des figurines, des cartes (6) ou des dés (8).

8. Ensemble selon l'une quelconque des revendications 1 à 7, **caractérisé en ce que** le plateau de jeu comporte plusieurs zones de jeu, respectivement dédiées à différents types d'éléments communicants (4, 6, 8).

9. Ensemble selon l'une quelconque des revendications 1 à 8, **caractérisé en ce que** les éléments communicants comportent au moins un dé (8), le plateau de jeu (1) comportant au moins un élément de détection correspondant disposé dans une zone de jeu (7) délimitant un emplacement de lancement de dé.

10. Ensemble selon la revendication 9, **caractérisé en ce que** le dé (8) comporte une étiquette radiofréquence (10) associée à chacune de ses faces, les différentes étiquettes du dé étant munies de codes d'identification (ID) différents.

11. Ensemble selon la revendication 9, **caractérisé en ce que** le dé (8) comporte au moins une étiquette d'identification radiofréquence (10), l'ensemble comportant des moyens de sélection pour sélectionner un nombre, de façon aléatoire, et afficher le nombre sélectionné sur un écran, lors de la détection de la présence du dé.

12. Ensemble selon l'une quelconque des revendications 1 à 11, **caractérisé en ce qu'**il comporte un tapis de jeu amovible (3), disposé sur le plateau de jeu (1) et comportant une étiquette radiofréquence (10) munie d'un code d'identification (ID) représentatif du jeu correspondant.

13. Ensemble selon l'une quelconque des revendications 1 à 11, **caractérisé en ce qu'**il comporte un écran permettant d'afficher un tapis de jeu virtuel sur une face avant du plateau de jeu (1).

14. Ensemble selon l'une quelconque des revendications 1 à 13, **caractérisé en ce que** les lecteurs radiofréquence (13) émettent des signaux de porteuse (P) ayant une fréquence de l'ordre de 14 MHz.

15. Ensemble selon l'une quelconque des revendications 1 à 13, **caractérisé en ce que** les lecteurs radiofréquence (13) émettent des signaux de porteuse (P) ayant une fréquence de l'ordre de 125 kHz.

16. Ensemble selon l'une quelconque des revendications 1 à 15, **caractérisé en ce que** chaque code individuel (ID) étant unique, l'ensemble comporte des moyens de mémorisation de l'historique des caractéristiques et/ou des déplacements des éléments communicants (10) sur le plateau de jeu (1).

17. Ensemble selon la revendication 16, **caractérisé en ce que** les moyens de mémorisation comportent une base de données externe, accessible par Internet.

18. Ensemble selon la revendication 16, **caractérisé en ce que** les moyens de mémorisation comportent des moyens de mémorisation de l'historique associé à un élément communicant dans une mémoire de l'étiquette (10) dudit élément communicant.

19. Ensemble selon l'une quelconque des revendications 1 à 18, **caractérisé en ce que** le plateau de jeu (1) comporte au moins un bouton de validation (19) connecté au circuit de traitement numérique (15).

20. Ensemble selon l'une quelconque des revendications 1 à 19, **caractérisé en ce que** le plateau de jeu comporte un bouton d'annulation (20) connecté au circuit de traitement numérique (15).

## Claims

1. Electronic educational game set comprising communicating elements (4, 6, 8), each having a radio-frequency tag (10) provided with an individual identification code (ID), and a game board (1) comprising a digital processing circuit (15) connected to a plurality of antennas (14) arranged such as to form a sensor matrix for detecting the presence, type and position of the communicating elements, set **characterized in that** the game board comprises a plurality of radio-frequency readers (13₁ to 13ₘ) respectively connected to corresponding input/output terminals of the digital processing circuit (15), each radio-frequency reader (13) being connected to an associated group of antennas (14₁ to 14ₙ).

2. Set according to claim 1, **characterized in that** it comprises a multiplexer (16) between each radio-frequency reader (13) and the associated group of antennas (14).

3. Set according to one of claims 1 and 2, **characterized in that** the board (1) is formed by a removable assembly of a plurality of basic boards each comprising a basic digital processing circuit (15) connected to the antennas (14) of said basic board.

4. Set according to claim 3, **characterized in that** each basic board comprises, on three lateral sides thereof, means (21) for electrical and mechanical connection with another basic board.

5. Set according to one of claims 3 and 4, **characterized in that** each basic board comprises means for configuring as master board (1 m) or slave board (1 e), only the master board (1m) communicating with a display and supervision means (2).

6. Set according to claim 3, **characterized in that** the basic digital processing circuits (15) of the basic boards communicate without wires between one another and/or with an external display and supervision (2).

7. Set according to any one of claims 1 to 6, **characterized in that** the communicating elements comprise pieces (4), figurines, cards (6) or dice (8).

8. Set according to any one of claims 1 to 7, **characterized in that** the game board comprises several game zones respectively dedicated to different types of communicating elements (4, 6, 8).

9. Set according to any one of claims 1 to 8, **characterized in that** the communicating elements comprise at least one dice (8), the game board (1) comprising at least one corresponding sensor element arranged in a game zone (7) delineating a space for throwing dice.

10. Set according to claim 9, **characterized in that** the dice (8) comprises a radio-frequency tag (10) associated with each of its faces, the different tags of the dice being provided with different identification codes (ID).

11. Set according to claim 9, **characterized in that** the dice (8) comprises at least one radio-frequency identification tag (10), the set comprising selection means for randomly selecting a number and for displaying the selected number on a screen, when the presence of the dice is detected.

12. Set according to any one of claims 1 to 11, **characterized in that** it comprises a removable game mat (3) arranged on the game board (1) and comprising a radio-frequency tag (10) provided with an identification code (ID) representative of the corresponding game.

13. Set according to any one of claims 1 to 11, **characterized in that** it comprises a screen enabling a virtual game mat to be displayed on a front face of the game board (1).

14. Set according to any one of claims 1 to 13, **characterized in that** the radio-frequency readers (13) emit carrier signals (P) having a frequency of about 14 MHz.

15. Set according to any one of claims 1 to 13, **characterized in that** the radio-frequency readers (13) emit carrier signals (P) having a frequency of about 125 kHz.

16. Set according to any one of claims 1 to 15, **characterized in that** each individual code (ID) being unique, the set comprises means for storing the historical account of the characteristics and/or of the movements of the communicating elements (10) on the game board (1).

17. Set according to claim 16, **characterized in that** the means for storing comprise an external data base accessible via Internet.

18. Set according to claim 16, **characterized in that** the means for storing comprise means for storing the historical account associated with a communicating element in a memory of the tag (10) of said communicating element.

19. Set according to any one of claims 1 to 18, **characterized in that** the game board (1) comprises at least one enter button (19) connected to the digital processing circuit (15).

20. Set according to any one of claims 1 to 19, **characterized in that** the game board (1) comprises a cancel button (20) connected to the digital processing circuit (15).

## Patentansprüche

1. Elektronisches Lernspielset mit Kommunikationselementen (4, 6, 8), die jeweils ein Radiofrequenzetikett (10) tragen, das mit einem individuellen Erkennungscode (ID) versehen ist, sowie ein Spielbrett (1), das eine digitale Verarbeitungsschaltung (15) umfasst, die mit mehreren Antennen (14) verbunden ist, die so angeordnet sind, dass sie eine Erkennungsmatrix zur Erkennung des Vorhandenseins, der Beschaffenheit und der Position der Kommunikationselemente bilden, Set, das **dadurch gekennzeichnet ist, dass** das Spielbrett mehrere Radiofrequenzleser (13₁ bis 13_{M}) umfasst, die jeweils an entsprechende Eingangs/Ausgangsklemmen der digitalen Verarbeitungsschaltung (15) gelegt sind, wobei jeder Radiofrequenzleser (13) an eine zugehörige Antenneneinheit (14₁ bis 14ₙ) angeschlossen ist.

2. Set nach Anspruch 1, **dadurch gekennzeichnet, dass** es einen Multiplexer (16) zwischen jedem Radiofrequenzleser (13) und der zugehörigen Antenneneinheit (14) umfasst.

3. Set nach einem der Ansprüche 1 und 2, **dadurch gekennzeichnet, dass** das Brett (1) von einer wegnehmbaren Zusammenstellung mehrerer Grundplatten gebildet wird, die jeweils eine elementare digitale Verarbeitungsschaltung (15) umfassen, die mit den Antennen (14) der Grundplatte verbunden ist.

4. Set nach Anspruch 3, **dadurch gekennzeichnet, dass** jede Grundplatte an drei Seitenwänden Mittel (21) zum elektrischen und mechanischen Anschluss an eine andere Grundplatte umfasst.

5. Set nach einem der Ansprüche 3 und 4, **dadurch gekennzeichnet, dass** jede Grundplatte Mittel zur Konfiguration als Hauptplatte (1 m) oder Nebenplatte (1 e) umfasst, wobei nur die Hauptplatte (1 m) mit einem Element (2) zum Anzeigen und Überwachen verbunden ist.

6. Set nach Anspruch 3, **dadurch gekennzeichnet, dass** die elementaren digitalen Verarbeitungsschaltungen (15) der Grundplatten miteinander und/oder mit einem Element (2) zum externen Anzeigen und Überwachen drahtlos kommunizieren.

7. Set nach einem der Ansprüche 1 bis 6, **dadurch gekennzeichnet, dass** die Kommunikationselemente Steine (4), Figuren, Karten (6) oder Würfel (8) umfassen.

8. Set nach einem der Ansprüche 1 bis 7, **dadurch gekennzeichnet, dass** das Spielbrett mehrere Spielzonen umfasst, die jeweils für unterschiedliche Arten von Kommunikationselementen (4, 6, 8) vorgesehen sind.

9. Set nach einem der Ansprüche 1 bis 8, **dadurch gekennzeichnet, dass** die Kommunikationselemente mindestens einen Würfel (8) umfassen, wobei das Spielbrett (1) mindestens ein entsprechendes Erkennungselement umfasst, das in einer Spielzone (7) angeordnet ist, die eine Fläche zum Werfen von Würfeln begrenzt.

10. Set nach Anspruch 9, **dadurch gekennzeichnet, dass** der Würfel (8) ein Radiofrequenzetikett (10) umfasst, das jede seiner Seiten entspricht, wobei die einzelnen Etiketten des Würfels mit unterschiedlichen Erkennungscodes (ID) versehen sind.

11. Set nach Anspruch 9, **dadurch gekennzeichnet, dass** der Würfel (8) mindestens ein Radiofrequenz-Erkennungsetikett (10) umfasst, wobei das Set Auswahlmittel zum Auswählen einer willkürlichen Zahl und beim Erkennen des Vorhandenseins des Würfels zum Anzeigen der gewählten Zahl auf einem Bildschirm umfasst.

12. Set nach einem der Ansprüche 1 bis 11, **dadurch gekennzeichnet, dass** es eine wegnehmbare Spielauflage (3) umfasst, die auf dem Spielbrett (1) angeordnet wird, und ein Radiofrequenzetikett (10) umfasst, das mit einem Erkennungscode (ID) versehen ist, der für das jeweilige Spiel charakteristisch ist.

13. Set nach einem der Ansprüche 1 bis 11, **dadurch gekennzeichnet, dass** es einen Bildschirm umfasst, mit dem eine virtuelle Spielauflage auf einer Vorderseite des Spielbretts (1) angezeigt werden kann.

14. Set nach einem der Ansprüche 1 bis 13, **dadurch gekennzeichnet, dass** die Radiofrequenzleser (13) Trägerfrequenzsignale (P) aussenden, die eine Frequenz in der Größenordnung von 14 MHz haben.

15. Set nach einem der Ansprüche 1 bis 13, **dadurch gekennzeichnet, dass** die Radiofrequenzleser (13) Trägerfrequenzsignale (P) aussenden, die eine Frequenz in der Größenordnung von 125 kHz haben.

16. Set nach einem der Ansprüche 1 bis 15, **dadurch gekennzeichnet, dass**, nachdem jeder individuelle Code (ID) nur einmal vorkommt, das Set Mittel zum Speichern des Protokolls der Merkmale und/oder der Bewegungen der Kommunikationselemente (10) auf dem Spielbrett (1) umfasst.

17. Set nach Anspruch 16, **dadurch gekennzeichnet, dass** die Speicherungsmittel eine externe Datenbank umfassen, auf die über das Internet zugegriffen werden kann.

18. Set nach Anspruch 16, **dadurch gekennzeichnet, dass** die Speicherungsmittel Mittel zum Speichern des Protokolls umfassen, die mit einem Kommunikationselement in einem Speicher des Etiketts (10) des Kommunikationselements verbunden sind.

19. Set nach einem der Ansprüche 1 bis 18, **dadurch gekennzeichnet, dass** das Spielbrett (1) mindestens einen Quittierungsknopf (19) umfasst, der mit der digitalen Verarbeitungsschaltung (15) verbunden ist.

20. Set nach einem der Ansprüche 1 bis 19, **dadurch gekennzeichnet, dass** das Spielbrett mindestens einen Annullierungsknopf (20) umfasst, der mit der digitalen Verarbeitungsschaltung (15) verbunden ist.
